# EUROPÄISCHE PATENTANMELDUNG

(11) **EP 2 302 269 A1**
(43) Veröffentlichungstag der Anmeldung: **30.03.2011**
(21) Anmeldenummer: 09012137.7
(22) Anmeldetag: 24.09.2009
(51) Int. Cl.: F16J 15/54, F16J 15/32, F16H 25/24

(54) **Dichtungsanordnung, Dichtring und deren Verwendung**

(71) Anmelder: Carl Freudenberg KG, 69469 Weinheim (DE); A. Berger GmbH & Co. Präzisions-Maschinenbauteile KG, 87497 Wertach (DE)
(72) Erfinder: Klenk, Thomas, 69221 Dossenheim (DE); Paul, Ricki, 69117 Heidelberg (DE); Mösle, Otto, 87437 Kempten (DE)

(57) **Zusammenfassung**

Dichtungsanordnung, umfassend eine Gewindewelle (1), zumindest einen Dichtring (2) mit zumindest einer Dichtlippe (3) und eine Gewindemutter (5), wobei der Dichtring (2) in der Gewindemutter (5) angeordnet ist, wobei der Dichtring (2) und die Gewindemutter (5) die Gewindewelle (1) jeweils konzentrisch umschließen, wobei der Dichtring (2) einen axialen Gewindewellenabschnitt (6) umschließt, wobei die Dichtlippe (3) die Oberfläche (7) der Gewindewelle (1) im axialen Gewindewellenabschnitt (6) anliegend und dichtend berührt und wobei die Dichtlippe (3) aus einem Vliesstoff besteht.

## Beschreibung

### Technisches Gebiet

Die Erfindung betrifft eine Dichtungsanordnung, umfassend eine Gewindewelle, zumindest einen Dichtring mit zumindest einer Dichtlippe und eine Gewindemutter, wobei der Dichtring in der Gewindemutter angeordnet ist, wobei der Dichtring und die Gewindemutter die Gewindewelle jeweils konzentrisch umschließen und wobei der Dichtring einen axialen Gewindewellenabschnitt umschließt.

Außerdem betrifft die Erfindung einen Dichtring für eine solche Dichtungsanordnung und die Verwendung der Dichtungsanordnung und des Dichtrings.

### Stand der Technik

Einen Dichtungsanordnung wie eingangs beschrieben, ist allgemein bekannt. Zur Abdichtung der Gewindewelle gelangt beispielsweise ein Dichtring aus Polyamid zur Anwendung, in den innenumfangsseitig ein Gewinde mit näherungsweise derselben Steigung eingeschnitten ist, wie sie das Gewinde der Gewindewelle aufweist. Die Abdichtung der Gewindewelle durch den Polyamid-Dichtring ist werkstoffbedingt wenig zufriedenstellend. Aufgrund der hohen Steifigkeit des Polyamids sowie der hohen Reibung zwischen dem Polyamid-Dichtring und der zumeist aus Stahl bestehenden Gewindewelle muss das Innengewinde des Polyamid-Dichtrings allumfassend mit großem Spiel ausgeführt sein, um die Beweglichkeit der Gewindemutter relativ zur Gewindewelle nicht völlig oder zumindest nicht unerwünscht stark einzuschränken. Dementsprechend sind solche Polyamid-Dichtringe nur zur Abdichtung gegen grobe Verunreinigungen zwar geeignet, lassen aber zum Beispiel Staub oder Schleifpartikel nahezu ungebremst am Dichtring vorbei.

Anstelle eines Polyamid-Dichtrings ist auch ein Dichtring aus elastomerem Werkstoff zur Abdichtung einer Gewindewelle bekannt. Der Elastomer-Dichtring hat zumindest eine Dichtlippe aus elastomerem Werkstoff, die die Oberfläche der Gewindewelle in einem axialen Gewindewellenabschnitt einigermaßen anliegend und einigermaßen dichtend berührt. Die Überdeckung der Dichtlippe mit der Oberfläche der Gewindewelle ist nahezu gleichmäßig. Aufgrund der gegenüber dem zuvor beschriebenen Polyamid größeren Weichheit des Elastomers, legt sich die Elastomer-Dichtlippe relativ gut innerhalb des axialen Gewindewellenabschnitts an die abzudichtende Oberfläche der Gewindewelle an. Die Reibung der Elastomer-Dichtlippe auf der Gewindewelle ist jedoch unerwünscht hoch, insbesondere dann, wenn die Gewindewelle nicht oder - für eine reibungsarme Bewegung der Dichtlippe auf der Oberfläche der Gewindewelle - nur unzureichend geschmiert ist. Diese unerwünscht hohe Reibung ist insbesondere dann von Nachteil, wenn die Gewindewelle in Kugelgewindetrieben zur Anwendung gelangt, da eine exakte Positionierung der Gewindewelle gegenüber der Gewindemutter dann nicht mehr problemlos möglich ist. Die hohe Reibung führt außerdem zu einer starken lokalen Erwärmung, so dass lokale Längenänderungen der Gewindewelle hervorgerufen werden. Eine exakte Positionierung von Gewindewelle und Gewindemutter relativ zueinander, zum Beispiel im Tausendstel-Bereich, wie sie bei Schleifmaschinen erforderlich ist, ist auch aus diesem Grund praktisch nicht zu erzielen.
Um die geschilderten Nachteile zu vermeiden, wird die Dichtlippe derart ausgebildet, dass sie insbesondere bei einem scharfkantigen Gewinde am Gewindekopf der Gewindewelle nicht vollständig zum Anliegen kommen und aufgrund der immer noch erheblichen Steifigkeit des Elastomer-Werkstoffs so geringe Spalte freigibt, durch die der Staub und andere kleine Partikel ins Innere der Gewindemutter vordringen können.

Verunreinigungen zwischen Gewindewelle und Gewindemutter führen nicht nur zu einer schlechten Einstellbarkeit des Gewindetriebs, wie zuvor beschrieben, sondern auch zu einem erhöhten Verschleiß und dadurch zu unerwünscht niedrigen Standzeiten.

### Darstellung der Erfindung

Der Erfindung liegt die Aufgabe zugrunde, eine Dichtungsanordnung der eingangs genannten Art derart weiterzuentwickein, dass die Gebrauchseigenschaften des Dichtrings wesentlich verbessert werden, bei gleichzeitig verringerter Reibung zwischen dem Dichtring und der Gewindewelle und daraus resultierend verringerter Erwärmung des Dichtbereichs. Die Gewindewelle und die Gewindemutter sollen besonders exakt zueinander positionierbar sein, ohne nachteiligen Einfluss des Dichtrings und der Gewindetrieb soll während einer langen Gebrauchsdauer gleichbleibend gute Gebrauchseigenschaften aufweisen.

Diese Aufgabe wird erfindungsgemäß durch eine Dichtungsanordnung gemäß Anspruch 1 gelöst. Auf vorteilhafte Ausgestaltungen nehmen die auf Anspruch 1 direkt oder indirekt rückbezogenen Ansprüche Bezug.

Zur Lösung der Aufgabe ist eine Dichtungsanordnung vorgesehen, umfassend eine Gewindewelle, zumindest einen Dichtring mit zumindest einer Dichtlippe und eine Gewindemutter, wobei der Dichtring in der Gewindemutter angeordnet ist, wobei der Dichtring und die Gewindemutter die Gewindewelle jeweils konzentrisch umschließen, wobei der Dichtring einen axialen Gewindewellenabschnitt umschließt, wobei die Dichtlippe die Oberfläche der Gewindewelle im axialen Gewindewellenabschnitt anliegend und dichtend berührt und wobei die Dichtlippe aus einem Vliesstoff besteht. Im Vergleich zu den eingangs beschriebenen Dichtringen aus Polyamid oder einem Elastomer weist die aus einem Vliesstoff bestehende Dichtlippe eine herausragend niedrige Steifigkeit auf, so dass sich die Dichtlippe anliegend und dichtend im Gewindewellenabschnitt an die Oberfläche der Gewindewelle anschmiegt. Die Dichtwirkung ist dadurch wesentlich verbessert und auch feine Stäube und z.B. kleinste Schleifpartikel werden aus dem Inneren der Dichtungsanordnung ferngehalten.
Außerdem haben Vliesstoffe im Vergleich zu elastomeren Werkstoffen - bei jeweils gleichem Reib-Partner - besonders niedrige Reibwerte, was in Verbindung mit deren niedriger Steifigkeit zu einer nur vernachlässigbaren Erhöhung der Temperatur im Dichtbereiche und zu einer hohen Verschleißfestigkeit des Dichtrings führt. Die Dichtungsanordnung weist deshalb gleichbleibend gute Gebrauchseigenschaften während einer langen Gebrauchsdauer auf.

Gemäß einer vorteilhaften Ausgestaltung kann es vorgesehen sein, dass die Dichtlippe aus einem PTFE-imprägnierten Vliesstoff besteht. Die niedrige Steifigkeit der Dichtlippe wird dadurch - im Vergleich zu einem nichtimprägnierten Vliesstoff - nicht in nennenswertem Maße erhöht; die Steifigkeit ist trotzdem ausreichend niedrig, um stets eine anliegende und dichtende Berührung im axialen Gewindewellenabschnitt mit der Oberfläche der abzudichtenden Gewindewelle zu gewährleisten. Durch den PTFE-Vliesstoff wird jedoch die Reibung weiter reduziert, die daraus resultierende Erwärmung ebenfalls und die Verschleißfestigkeit wird verbessert.
Imprägnierte Vliesstoffe als Dichtungsmaterial für Stopfbuchspackungen sind aus der DE 102 50 264 B1 bekannt. Die Anwendung Stopfbuchspackung" und "Abdichtung einer Gewindewelle gegenüber einer Gewindemutter" sind jedoch nicht vergleichbar, weil es bei Stopfbuchspackungen nicht auf möglichst geringe Steifigkeit ankommt und außerdem durch Stopfbuchspackungen nur nicht-profilierte Oberflächen abgedichtet werden.

Durch die niedrige Steifigkeit des Vliesstoffs liegt die Dichtlippe selbst an scharfkantigen Zähnen der Gewindewelle noch dichtend an. Durch die PTFE-Imprägnierung des Vlieses ist dieser Werkstoff querschnittsdichter als zum Beispiel nicht-imprägnierte Vliesstoffe oder Filze. Auch werden Stäube in einem solchen Werkstoff weniger stark eingelagert.

Die Dichtlippe kann, bezogen auf die Oberfläche im axialen Gewindewellenabschnitt, an jeder Umfangsstelle eine Überdeckung aufweisen, die 0,5 mm bis 2 mm beträgt. Durch diese geometrische Anpassung der Dichtlippe an die Oberflächenprofilierung der Gewindewelle berührt die Dichtlippe die abzudichtende Oberfläche der Gewindewelle mit einer über den Umfang gleichmäßigen Anpressung. Lokale Überbeanspruchungen der Dichtlippe, daraus resultierender Verschleiß und ein unerwünscht früher Ausfall der Dichtwirkung werden dadurch sicher verhindert.

Eine exakte Positionierung des Dichtrings zur Gewindewelle kann dadurch erleichtert werden, dass der Dichtring einen Halteträger umfasst, der mit der Dichtlippe verbunden ist. Der Halteträger hat die Aufgabe, die weiche Dichtlippe innerhalb der Gewindemutter in Umfangsrichtung passend positioniert zur Gewindewelle zu halten.

Zumindest zwei axial zueinander benachbart angeordnete Dichtlippen können in einer funktionstechnischen Reihenschaltung in nur einem Halteträger angeordnet sein. Die Dichtwirkung kann durch diese funktionstechnische Reihenschaltung bedarfsweise verbessert werden.

Die Dichtlippen können durch Distanzscheiben voneinander getrennt sein. Trotz der verbesserten Dichtwirkung und trotz der Distanzscheiben wird die Montage jedoch nicht nennenswert aufwendiger. Nur der eine Halteträger, der die mehreren Dichtlippen und die axial dazwischen angeordneten Distanzscheiben aufweist, wird in der Gewindemutter angeordnet.

Der Halteträger besteht bevorzugt aus Polyamid. Das ist insbesondere dann von Vorteil, wenn der Halteträger eine Führungsfunktion des Dichtrings auf der Gewindewelle übernimmt. Die Dichtlippe ist der abzudichtenden Oberfläche der Gewindewelle dadurch stets optimal zugeordnet.

Der Halteträger kann dann ein zum Außengewinde der Gewindewelle kongruentes Innengewinde aufweisen und die Gewindewelle konzentrisch umschließen. Durch den aus PTFE bestehenden Halteträger wird eine reibungsarme und exakte axiale Hin- und Herbeweglichkeit von Gewindewelle und Gewindemutter relativ zueinander sicher gestellt.

Um die Lage des Halteträgers, in Umfangsrichtung betrachtet, zur Gewindewelle besser erkennen zu können und um den Dichtring ohne Montagefehler einfach und lagerichtig auf der Gewindewelle positionieren zu können, kann der Halteträger an einer Umfangsstelle eine Positionierungseinrichtung zur Positionierung des Dichtrings in Umfangsrichtung zur Gewindewelle aufweisen.

Die Montage des Dichtrings auf der Gewindewelle erfolgt derart, dass der Halteträger mit seiner Positionierungseinrichtung im Bereich des offenen Gewindegangs am stirnseitigen Ende der Gewindewelle angesetzt und dann auf das Ende der Gewindewelle aufgeschraubt wird. Die Dichtlippe berührt die abzudichtende Oberfläche der Gewindewelle innerhalb des axialen Gewindewellenabschnitts an jeder Stelle der axialen Erstreckung der Gewindewelle mit der gleichen Überdeckung und damit auch mit der gleichen Anpressung.

Außerdem betrifft die Erfindung einen Dichtring für eine Dichtungsanordnung, wie zuvor beschrieben, wobei die Dichtlippe aus einem Vliesstoff besteht.

Besonders vorteilhaft ist die Verwendung der zuvor beschriebenen Dichtungsanordnung und des zuvor beschriebenen Dichtrings in einem Kugelgewindetrieb, wobei die Gewindewelle als Kugelgewindewelle und die Gewindemutter als Kugelgewindemutter ausgebildet sind. Kugelgewindetriebe werden häufig in Werkzeugmaschinen für spanabhebende Fertigungsverfahren eingesetzt und sind dementsprechend mehr oder weniger groben Verunreinigungen ausgesetzt. Durch die guten Gebrauchseigenschaften des erfindungsgemäßen Dichtrings für diese Anwendungsfälle können hohe Standzeiten des Kugelgewindetriebs auch unter ungünstigen Betriebsbedingungen erreicht werden.

### Kurzbeschreibung der Zeichnung

Ein Ausführungsbeispiel der erfindungsgemäßen Dichtungsanordnung mit dem erfindungsgemäßen Dichtring wird nachfolgend anhand der Fig. 1 bis 5 näher erläutert. Die Fig. 1 bis 5 zeigen jeweils in schematischer Darstellung:
- Fig. 1: eine Dichtungsanordnung (Schnitt A-A aus Fig. 2), bei der der Dichtring in einer Gewindemutter angeordnet ist, wobei die Einheit, bestehend aus Gewindemutter und Dichtring, auf der Gewindewelle angeordnet ist,
- Fig. 2: die Ansicht des Dichtrings aus Fig. 1,
- Fig. 3: den Schnitt B-B aus Fig. 2,
- Fig. 4: eine perspektivische Ansicht des Dichtrings aus Fig. 2,
- Fig. 5: den Schnitt C-C aus Fig. 3 mit der Positionierungseinrichtung.

### Ausführung der Erfindung

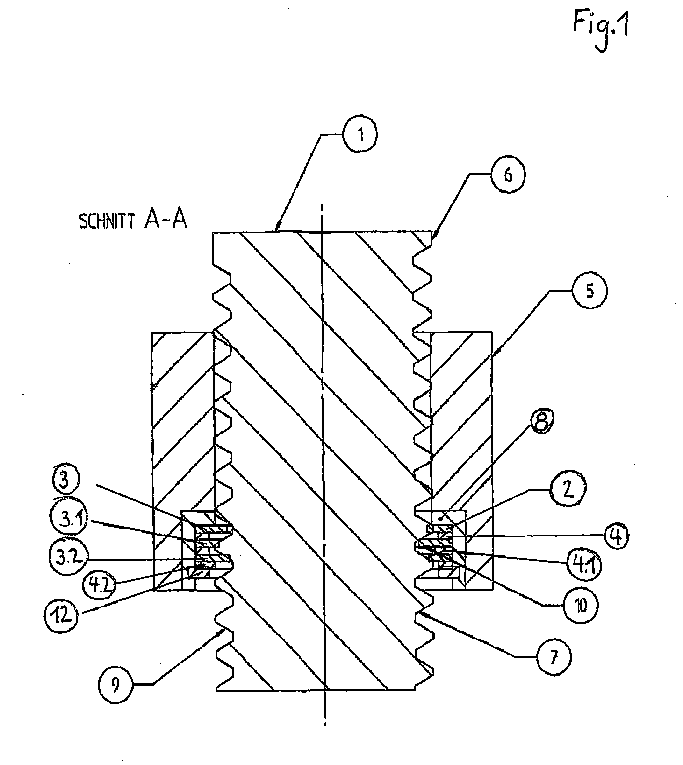

In Fig. 1 ist ein Ausführungsbeispiel der erfindungsgemäßen Dichtungsanordnung gezeigt. Gezeigt ist ein Kugelgewindetrieb, bei dem die Gewindewelle 1 als Kugelgewindewelle und die Gewindemutter 5 als Kugeigewindemutter ausgebildet sind. Der Kugelgewindetrieb kann in einer Werkzeugmaschine, zum Beispiel in einer Schleifmaschine, einer Drehmaschine oder einer Fräsmaschine zur Anwendung gelangen. Der Dichtring 2 weist in dem hier gezeigten Ausführungsbeispiel drei Dichtlippen 3, 3.1, 3.2 und drei Distanzscheiben 4, 4.1, 4.2 auf, die axial dazwischen angeordnet sind, wobei der Dichtring 2 die Gewindewelle 1 mit seinem Halteträger 8 konzentrisch umschließt. Der Halteträger 8 ist drehfest innerhalb der Gewindemutter 5 angeordnet, die zusammen mit dem Halteträger 8 relativ zur Gewindewelle 1 axial hin-und her beweglich ist.

Der Dichtring 2 umschließt einen axialen Gewindewellenabschnitt 6, wobei die Dichtlippen 3, 3.1, 3.2 die Oberfläche 7 der Gewindewelle 1 im axialen Gewindewellenabschnitt 6 anliegend und dichtend berühren und wobei die Dichtlippen 3, 3.1, 3.2 jeweils aus einem PTFE-imprägnierten Vliesstoff bestehen.

Die Dichtlippen 3, 3.1, 3.2 sind in einer funktionstechnischen Reihenschaltung im Halteträger 8 angeordnet, wobei die Dichtlippen 3, 3.1, 3.2 jeweils aus einer gestanzten Scheibe bestehen, die gegeneinander winkelversetzt entsprechend der Gewindesteigung der Gewindewelle 1 angeordnet sind. Dadurch ist die Überdeckung der Dichtlippen 3, 3.1, 3.2, bezogen auf die Oberfläche 7 im axialen Gemdndewellenabschnitt 6, an jeder Umfangsstelle gleich. Die Überdeckung beträgt im hier gezeigten Ausführungsbeispiel etwa 1 mm.

Der Halteträger 8 besteht aus PA und weist ein kongruent zum Außengewinde 9 der Gewindewelle 1 ausgebildetes Innengewinde 10 auf, über das der Dichtring 2 auf der Gewindewelle 1 geführt ist.

Durch die abhängig von der Gewindesteigung der Gewindewelle 1 angeordneten Dichtlippen 3, 3.1, 3.2 ist es erforderlich, den Dichtring 2, in Umfangsrichtung betrachtet, lagerichtig auf der Gewindewelle 1 zu positionieren. Dazu weist der Halteträger 8 an einer Umfangsstelle die Positionierungseinrichtung 11 auf.

Die Dichtlippen 3, 3.1, 3.2 und die Distanzscheiben 4, 4.1, 4.2 sind durch einen Sprengring 12 in der Gewindemutter 5 fixiert.

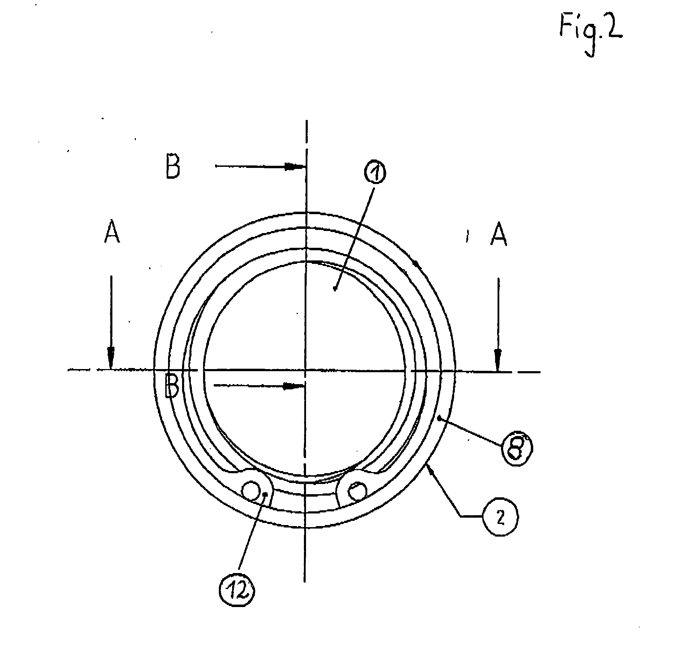

In Fig. 2 ist der Dichtring 2 aus Fig. 1 als Einzelteil in einer Ansicht gezeigt. Dabei ist zu erkennen, dass die Dichtlippen 3, 3.1, 3.2 in Umfangsrichtung zueinander versetzt im Halteträger 8 angeordnet sind.

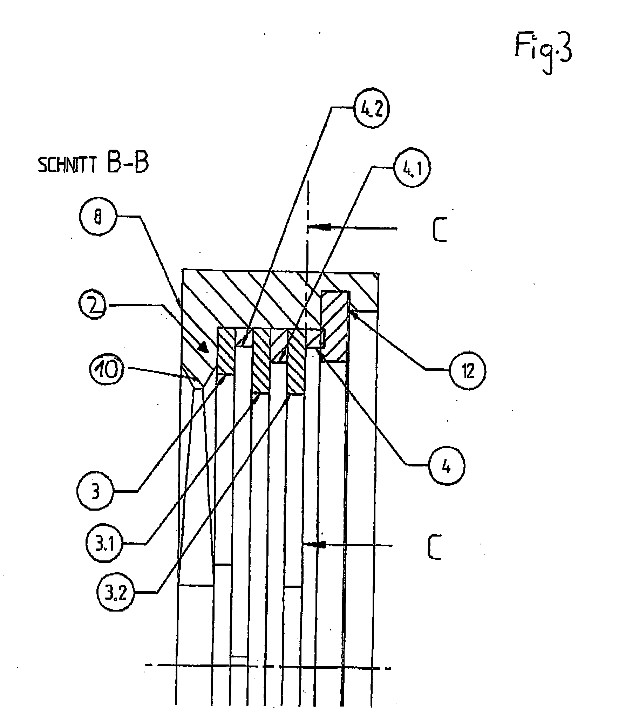

In Fig. 3 ist der Dichtring 2 aus Fig. 2 entlang der Linie B-B geschnitten dargestellt. Die Führung des Dichtrings 2 auf der Gewindewelle 1 wird durch den Halteträger 8 aus PA übernommen. Die Abdichtung der Gewindewelle 1 gegenüber der Gewindemutter 5 erfolgt demgegenüber durch die Dichtlippen 3, 3.1, 3.2, die jeweils aus einem PTFE-imprägnierten Vliesstoff bestehen.

Sowohl der Halteträger 8 mit seinem Innengewinde 10 als auch die im Halteträger 8 angeordneten Dichtlippen 3, 3.1, 3.2 sind an die Steigung des Gewindes der Gewindewelle 1 angepasst, einerseits um eine exakte Führung von Gewindewelle 1 zum Dichtring 2 zu gewährleisten und andererseits eine zuverlässige Abdichtung der Gewindewelle 1 gegenüber der Gewindemutter 5.

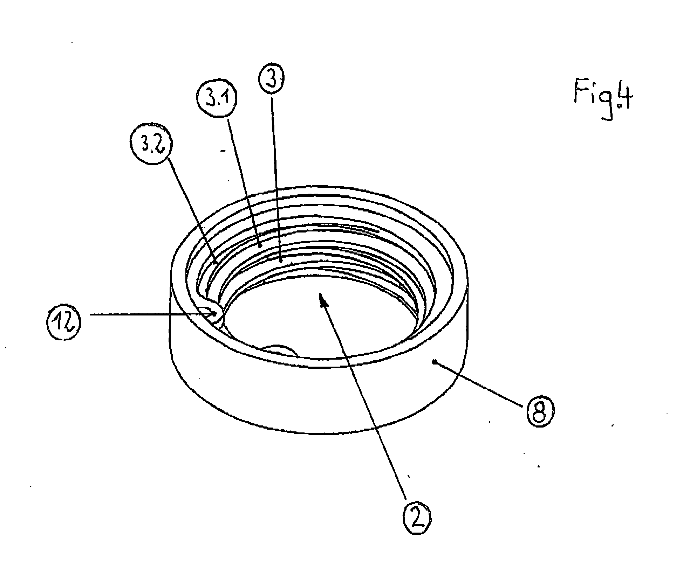

In Fig. 4 ist der Dichtring 2 aus Fig. 2 perspektivisch dargestellt.

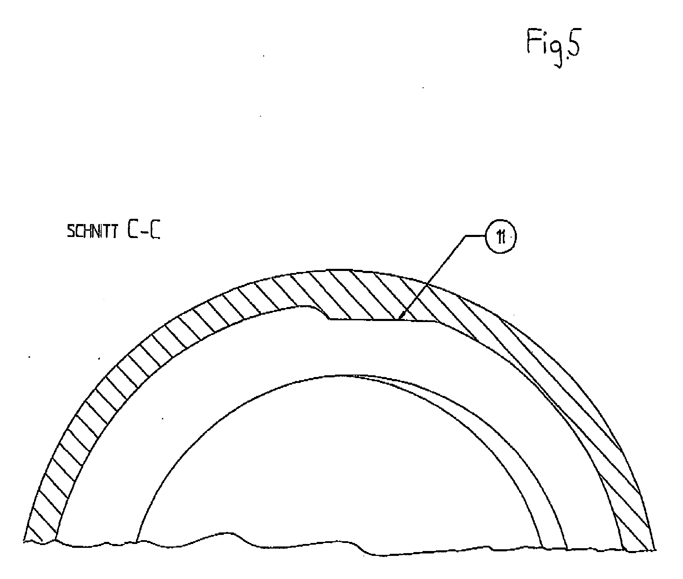

Fig. 5 zeigt die Positionierungseinrichtung 11 am Halteträger 8.

## Patentansprüche

1. Dichtungsanordnung, umfassend eine Gewindewelle (1), zumindest einen Dichtring (2) mit zumindest einer Dichtlippe (3) und eine Gewindemutter (5), wobei der Dichtring (2) in der Gewindemutter (5) angeordnet ist, wobei der Dichtring (2) und die Gewindemutter (5) die Gewindewelle (1) jeweils konzentrisch umschließen, wobei der Dichtring (2) einen axialen Gewindewellenabschnitt (6) umschließt, wobei die Dichtlippe (3) die Oberfläche (7) der Gewindewelle (1) im axialen Gewindewellenabschnitt (6) anliegend und dichtend berührt und wobei die Dichtlippe (3) aus einem Vliesstoff besteht.

2. Dichtungsanordnung nach Anspruch 1, **dadurch gekennzeichnet, dass** die Dichtlippe (3) aus einem PTFE-imprägnierten Vliesstoff besteht.

3. Dichtungsanordnung nach einem der Ansprüche 1 oder 2, **dadurch gekennzeichnet, dass** die Dichtlippe (3), bezogen auf die Oberfläche (7) im axialen Gewindewellenabschnitt (6), an jeder Umfangsstelle eine Überdeckung aufweist, die 0,5 mm bis 2 mm beträgt

4. Dichtungsanordnung nach einem der Ansprüche 1 bis 3, **dadurch gekennzeichnet, dass** der Dichtring (2) einen Halteträger (8) umfasst, der mit der Dichtlippe (3) verbunden ist.

5. Dichtungsanordnung nach einem der Ansprüche 1 bis 4, **dadurch gekennzeichnet, dass** zumindest zwei axial zueinander benachbart angeordnete Dichtlippen (3, 3.1, 3.2, ...) in einer funktionstechnischen Reihenschaltung in nur einem Halteträger (8) angeordnet sind.

6. Dichtungsanordnung nach Anspruch 5, **dadurch gekennzeichnet, dass** die Dichtlippen (3, 3.1, 3.2, ...) durch Distanzscheiben (4, 4.1, 4.2, ..,) voneinander getrennt sind.

7. Dichtungsanordnung nach einem der Ansprüche 4 bis 6, **dadurch gekennzeichnet, dass** der Halteträger (8) aus PA besteht.

8. Dichtungsanordnung nach einem der Ansprüche 4 bis 7, **dadurch gekennzeichnet, dass** der Halteträger (8) ein zum Außengewinde (9) der Gewindewelle (1) kongruentes Innengewinde (10) aufweist und die Gewindewelle (1) konzentrisch umschließt.

9. Dichtungsanordnung nach einem der Ansprüche 4 bis 8, **dadurch gekennzeichnet, dass** der Halteträger (8) an einer Umfangsstelle eine Positionierungseinrichtung (11) zur Positionierung des Dichtrings (2) in Umfangsrichtung zur Gewindewelle (1) aufweist.

10. Dichtring für eine Dichtungsanordnung nach einem der vorhergehenden Ansprüche 1 bis 9, **dadurch gekennzeichnet, dass** die Dichtlippe (3) aus einem Vliesstoff besteht.

11. Verwendung einer Dichtungsanordnung nach einem der Ansprüche 1 bis 9 und eines Dichtrings nach Anspruch 10 in einem Kugelgewindetrieb, wobei die Gewindewelle (1) als Kugelgewindewelle und die Gewindemutter (5) als Kugelgewindemutter ausgebildet sind.

## Geänderte Patentansprüche

### Geänderte Patentansprüche gemäss Regel 137(2) EPÜ.

**1.** Dichtungsanordnung, umfassend eine Gewindewelle (1), zumindest einen Dichtring (2) mit zumindest einer Dichtlippe (3) und eine Gewindemutter (5), wobei der Dichtring (2) in der Gewindemutter (5) angeordnet ist, wobei der Dichtring (2) und die Gewindemutter (5) die Gewindewelle (1) jeweils konzentrisch umschließen, wobei der Dichtring (2) einen axialen Gewindewellenabschnitt (6) umschließt, wobei die Dichtlippe (3) die Oberfläche (7) der Gewindewelle (1) im axialen Gewindewellenabschnitt (6) anliegend und dichtend berührt, **dadurch gekennzeichnet, dass** die Dichtlippe (3) aus einem PTFE-imprägnierten Vliesstoff besteht und dass die Dichtlippe (3), bezogen auf die Oberfläche (7) im axialen Gewindewellenabschnitt (6), an jeder Umfangsstelle eine Überdeckung aufweist, die 0,5 mm bis 2 mm beträgt.

**2.** Dichtungsanordnung nach Anspruch 1 , **dadurch gekennzeichnet, dass** der Dichtring (2) einen Halteträger (8) umfasst, der mit der Dichtlippe (3) verbunden ist.

**3.** Dichtungsanordnung nach einem der Ansprüche 1 oder 2, **dadurch gekennzeichnet, dass** zumindest zwei axial zueinander benachbart angeordnete Dichtlippen (3, 3.1, 3.2, ...) in einer funktionstechnischen Reihenschaltung in nur einem Halteträger (8) angeordnet sind.

**4.** Dichtungsanordnung nach Anspruch 3, **dadurch gekennzeichnet, dass** die Dichtlippen (3, 3.1, 3.2, ...) durch Distanzscheiben (4, 4.1, 4.2, ...) voneinander getrennt sind.

**5.** Dichtungsanordnung nach einem der Ansprüche 2 bis 4, **dadurch gekennzeichnet, dass** der Halteträger (8) aus PA besteht.

**6.** Dichtungsanordnung nach einem der Ansprüche 2 bis 5, **dadurch gekennzeichnet, dass** der Halteträger (8) ein zum Außengewinde (9) der Gewindewelle (1) kongruentes Innengewinde (10) aufweist und die Gewindewelle (1) konzentrisch umschließt.

**7.** Dichtungsanordnung nach einem der Ansprüche 2 bis 6, **dadurch gekennzeichnet, dass** der Halteträger (8) an einer Umfangsstelle eine Positionierungseinrichtung (11) zur Positionierung des Dichtrings (2) in Umfangsrichtung zur Gewindewelle (1) aufweist.

**8.** Verwendung einer Dichtungsanordnung nach einem der Ansprüche 1 bis 7 in einem Kugelgewindetrieb, wobei die Gewindewelle (1) als Kugelgewindewelle und die Gewindemutter (5) als Kugelgewindemutter ausgebildet sind.
